# EUROPEAN PATENT SPECIFICATION

(11) **EP 4 485 007 B1**
(45) Date of publication and mention of the grant of the patent: **04.11.2026**
(21) Application number: 23759734.9
(22) Date of filing: 10.02.2023
(51) Int. Cl.: G06T 7/33, G06T 3/147, G01S 17/86, G01S 17/87, G01S 17/89

(54) **INFORMATION PROCESSING DEVICE, INFORMATION PROCESSING METHOD, AND PROGRAM**
INFORMATIONSVERARBEITUNGSVORRICHTUNG, INFORMATIONSVERARBEITUNGSVERFAHREN UND PROGRAMM
DISPOSITIF DE TRAITEMENT D'INFORMATIONS, PROCÉDÉ DE TRAITEMENT D'INFORMATIONS, ET PROGRAMME

(30) Priority: 24.02.2022 JP 2022027269
(43) Date of publication of application: 01.01.2025
(73) Proprietor: Kyocera Corporation, Kyoto-shi, Kyoto 612-8501 (JP)
(72) Inventor: HOSHINO Koichi, Kyoto-shi, Kyoto 612-8501 (JP)
(74) Representative: Viering, Jentschura & Partner mbB Patent- und Rechtsanwälte
(86) International application number: PCT/JP2023/004645
(87) International publication number: WO 2023/162730

(56) References cited:
- WO-A1-2021/135157
- JP-A- 2014 173 990
- US-A1- 2018 158 200
- US-A1- 2020 174 130
- MICHAEL YING YANG ET AL: "Fusion of camera images and laser scans for wide baseline 3D scene alignment in urban environments", ISPRS JOURNAL OF PHOTOGRAMMETRY AND REMOTE SENSING, vol. 66, no. 6, 7 October 2011 (2011-10-07), pages S52 - S61, XP028346808, ISSN: 0924-2716, [retrieved on 20110915], DOI: 10.1016/J.ISPRSJPRS.2011.09.004
- ZEISL BERNHARD ET AL: "Automatic Registration of RGB-D Scans via Salient Directions", PROCEEDINGS OF THE IEEE INTERNATIONAL CONFERENCE ON COMPUTER VISION (ICCV), IEEE, 1 December 2013 (2013-12-01), pages 2808 - 2815, XP032573163, ISSN: 1550-5499, [retrieved on 20140228], DOI: 10.1109/ICCV.2013.349

## Description

### CROSS-REFERENCE TO RELATED APPLICATIONS

This application claims priority of Japanese Patent Application No. 2022-027269 filed February 24, 2022.

### TECHNICAL FIELD

The present disclosure relates to an information processing device, an information processing method, and a program.

### BACKGROUND OF INVENTION

A technology has been proposed that is to be installed in a mobile robot that moves around in an environment. The technology constructs an environment map using camera images and estimates its own position on the map (see, for example, Patent Literature 1).

### CITATION LIST

### PATENT LITERATURE

Patent Literature 1: Japanese Patent No. 6946524

### NON-PATENT LITERATURE

Non-Patent Literature 1: Michael Ying Yang et al: "Fusion of camera images and laser scans for wide baseline 3D scene alignment in urban environments", ISPRS Journal of Photogrammetry and Remote Sensing, vol. 66, no. 6 , pages S52-S61, 2011.
Non-Patent Literature 1 addresses the problem of automatic laser scan registration in urban environments. By sensor fusion of laser data with camera images, an approach to enable automatic 3D alignment between two widely separated scans is described which comprises extracting dominant planar structures from 3D point clouds and then utilizing the recovered 3D geometry to improve the performance of 2D image feature for wide baseline matching. This results in feature descriptors which are robust to camera viewpoint changes after the procedure of viewpoint normalization.

### SUMMARY

The invention is defined by the appended claims. An information processing device according to claim 1 is provided.

Further, an information processing method according to claim 4 is provided.

Additionally, a program according to claim 5 is provided.

### BRIEF DESCRIPTION OF THE DRAWINGS

FIG. 1 is a configuration diagram illustrating the basic configuration of a posture estimation system that includes an information processing device according to an embodiment of the present disclosure.
FIG. 2 is a configuration diagram illustrating a more detailed example of the posture estimation system in FIG. 1.
FIG. 3 is a block diagram illustrating a schematic configuration of the information processing device in FIG. 1.
FIG. 4 is a flowchart illustrating processing executed by the information processing device in FIG. 1.
FIG. 5 is a diagram illustrating an example of an image acquired by an image acquiring unit in FIG. 3.
FIG. 6 is a diagram illustrating an example of a distance image based on point cloud data acquired by a point cloud data acquiring unit in FIG. 3.
FIG. 7 illustrates an example of image synthesis carried out by creating associations between a first image and a second image.
FIG. 8 is a diagram illustrating a method of using a homographic transformation to create associations between the first image and the second image.
FIG. 9A is a diagram illustrating an example of first point cloud data after expansion and distortion correction.
FIG. 9B is a diagram illustrating an example of second point cloud data after expansion and distortion correction.
FIG. 10A is a diagram illustrating a first three-dimensional space point cloud created from the first point cloud data.
FIG. 10B is a diagram illustrating a second three-dimensional space point cloud created from the second point cloud data.
FIG. 11 is a diagram illustrating an example of an environment map generated using the information processing device according to this embodiment.
FIG. 12 is a diagram illustrating an example of an environment map generated using the same image and point cloud data as in FIG. 11 using an existing method in which feature points can be used.

### DESCRIPTION OF EMBODIMENTS

Construction of an environment map and own position estimation are performed by detecting the environment while estimating the posture of a mobile object. Here, posture estimation means estimating an amount of rotation and an amount of movement from data of different viewpoints. In order to perform posture estimation, associations need to be created between the data of different viewpoints. However, when constructing an environment map and performing own position estimation using a distance-measuring device, such as a laser radar, creating associations between point cloud data of different viewpoints representing the distribution of distances to measurement positions obtained from a distance-measuring device may be difficult. As a result, sufficient accuracy might not be achieved for posture estimation, and the accuracy of the environment map might not be improved.

For example, a known ICP (interactive closest point) algorithm is a method for aligning two three-dimensional point clouds. In this method, for each point in one point cloud, the closest point in another point cloud is searched for and regarded as a corresponding point. Furthermore, for each point and its corresponding point determined in this way, the method estimates a rigid body transformation that will minimize the distance between the corresponding points. A rigid body transformation is expressed using rotation and translation. Posture estimation can be performed by estimating a rigid body transformation. However, with this method, since corresponding points cannot be correctly determined, posture estimation might not be possible or the estimation error may be large.

On the other hand, a method may also be considered in which associations are created between the points of two sets of point cloud data of a distance-measuring device using two images, which correspond to the respective point clouds, of an image-capturing device whose capturing range is the same as the measurement range of the distance-measuring device. In other words, corresponding feature points in the two images can be extracted, and points located at the same positions as the feature points in the images in the two sets of point cloud data corresponding to the respective images can be extracted and regarded as corresponding points. Posture estimation can be performed by converting multiple sets of corresponding points obtained in this way into a point cloud of a three-dimensional space. However, in this method, points corresponding to feature points in images are often not included in point cloud data obtained from a distance-measuring device. This is because feature points in an image are detected from edges and corners in the image, but distance-measuring devices are not suited distance measurement of edges and corners. Therefore, the number of points that can be associated with each other in point cloud data may be limited. Therefore, a sufficient number of corresponding points might not be obtained, and this may result in low estimation accuracy for posture estimation.

An embodiment of the present disclosure improves a method of posture estimation as described above by facilitating the creation of associations between sets of point cloud data. Embodiments of the present disclosure are described below while referring to the drawings. The drawings used in the following description are schematic drawings. The dimensions and proportions and so on in the drawings do not necessarily match the actual dimensions and proportions and so on.

### (Basic Configuration of Posture Estimation System)

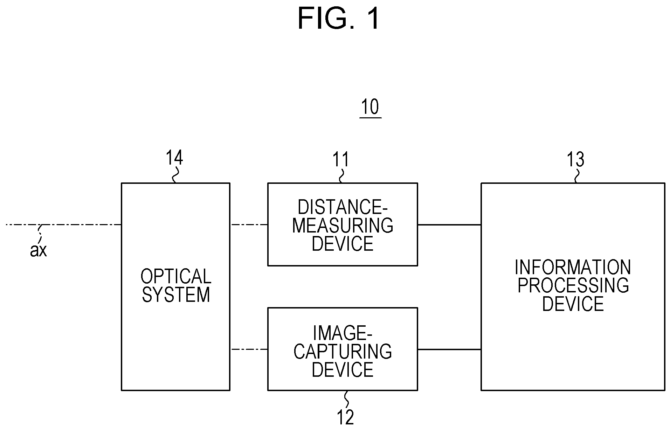

In an embodiment of the present disclosure, a posture estimation system 10 is installed in a mobile object. As illustrated in FIG. 1, the posture estimation system 10 includes a distance-measuring device 11, an image-capturing device 12, and an information processing device 13. The positions and orientations of the distance-measuring device 11 and the image-capturing device 12 are fixed relative to each other. In another embodiment, the information processing device 13 might not be installed in a mobile object and may be configured to communicate with the distance-measuring device 11 and the image-capturing device 12, which are installed in the mobile object.

The distance-measuring device 11 is a scanning-type distance-measuring device such as a laser radar. A laser radar measures the distance to a subject by performing irradiation with a laser beam over a measurement range and measuring the time taken for the reflected laser beam to return. Laser radar is also referred to as LiDAR (light detection and ranging). The distance-measuring device 11 outputs point cloud data representing a distance distribution over the measurement range. The distance distribution is the distribution of distances from the distance-measuring device 11 to the measurement positions. The point cloud data includes distance information detected by the distance-measuring device 11 scanned over the entire measurement range. The point cloud data includes, for example, distance data for one frame of the distance-measuring device 11.

Each point in the point cloud data contains position information for when the measurement target is viewed two-dimensionally and information on the distance from the distance-measuring device 11 to the measurement position corresponding to that position information. The two-dimensional position information corresponds to a direction from the distance-measuring device 11 to each measurement position in real space.

The image-capturing device 12 includes an image-capturing optical system and an image-capturing element, and acquires images of a capturing range. The capturing range of the image-capturing device 12 at least partially overlaps the measurement range of the distance-measuring device 11.

The distance-measuring device 11 and the image-capturing device 12 can be configured so that the coordinate systems used when observing the target substantially coincide with each other or are close together. The distance-measuring device 11 and the image-capturing device 12 may be configured so that optical axes ax of an optical system 14 used to detect or capture the subject coincide with each other. In this case, since the positional relationship between the distance-measuring device 11 and the image-capturing device 12 is fixed and their optical axes coincide with each other, the positions of pixels within an image and the positions of each point in a two-dimensional plane of the point cloud data can be preassociated each other within the same frame.

The distance-measuring device 11 and the image-capturing device 12 may be disposed such that the optical axes of the optical systems that measure or capture the subject are close to parallel to each other. In this case, the optical system 14 for aligning the optical axes with each other may be omitted. There is little or no disparity between detected point cloud data and images in the distance-measuring device 11 and the image-capturing device 12. Point cloud data output by the distance-measuring device 11 and an image output by the image-capturing device 12 can be superimposed so that their positions correspond to each other in the same frame.

The distance-measuring device 11 and the image-capturing device 12 may be fixed with respect to the mobile object so that their positions and orientations relative to each other are fixed. Examples of mobile objects include automobiles, robots, humans, wheelbarrows, wheelchairs, home appliances such as self-propelled vacuum cleaners, unmanned aerial vehicles such as drones, and toys with mobile functionality, as well as any mobile objects such as articles attached to these examples.

The information processing device 13 is a computer. The information processing device 13 may be any of a variety of computers, including general-purpose computers, workstations, and PCs (personal computers). The information processing device 13 may be a dedicated computer that performs specific processing for environment map construction and own-position estimation. The information processing device 13 may read dedicated programs and data to perform each of the functions of the information processing device 13 described below.

### (Specific Example of Posture Estimation System)

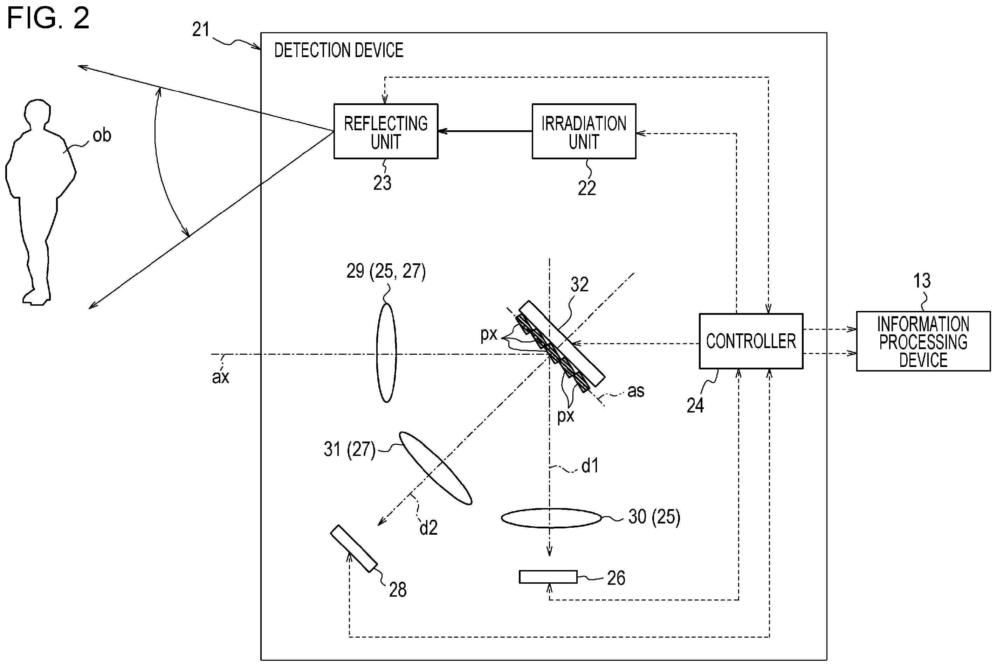

A more specific example of the posture estimation system 10 will be described while referring to FIG. 2. The posture estimation system 10 includes a detection device 21, which encompasses the functions of the distance-measuring device 11 and the image-capturing device 12, and the information processing device 13. The detection device 21 includes a irradiation unit 22, a reflecting unit 23, a controller 24, a first optical system 25, and a detection element 26 as components corresponding to the distance-measuring device 11. The detection device 21 includes the controller 24, a second optical system 27, and an image-capturing element 28 as components corresponding to the image-capturing device 12. The detection device 21 further includes a switching unit 32.

### (Configuration of Distance-Measuring Device)

The irradiation unit 22 may radiate at least any one of infrared rays, visible light, ultraviolet rays, or radio waves. In an embodiment, the irradiation unit 22 radiates infrared rays. The irradiation unit 22 performs irradiation with the electromagnetic waves radiated therefrom toward an object ob, which is a subject, directly or indirectly through the reflecting unit 23. In the embodiment illustrated in FIG. 2, the irradiation unit 22 performs irradiation with electromagnetic waves radiated therefrom toward the object ob indirectly through the reflecting unit 23. The object ob includes all objects located within the measurement range of the distance-measuring device 11.

In an embodiment, the irradiation unit 22 radiates a narrow, for example 0.5°, beam of electromagnetic radiation. In an embodiment, the irradiation unit 22 can radiate electromagnetic waves in the form of pulses. Examples of the irradiation unit 22 include an LED (light emitting diode) and an LD (laser diode). The irradiation unit 22 may switch between radiating and stopping radiating electromagnetic waves based on control performed by the controller 24, which is described later.

The reflecting unit 23 changes the irradiation position of the electromagnetic waves with which the object ob is irradiated by reflecting the electromagnetic waves radiated from the irradiation unit 22 while changing the direction of the electromagnetic waves. The irradiation position is identical to the measurement position at which the distance is measured by the distance-measuring device 11. The reflecting unit 23 scans the measurement range including the object ob using the electromagnetic waves radiated from the irradiation unit 22.

The reflecting unit 23 can scan the irradiation position of the electromagnetic waves in two-dimensional directions. The reflecting unit 23 can perform regular scanning of the irradiation position at which the distance-measuring device 11 performs detection, the irradiation position being scanned horizontally and successively shifted vertically. The reflecting unit 23 may scan the measurement range using any other method.

The reflecting unit 23 is configured so that at least part of the irradiation region of the electromagnetic waves radiated from the irradiation unit 22 and then reflected is included in the detection range of the detection element 26. Therefore, at least part of the electromagnetic waves with which the object ob is irradiated via the reflecting unit 23 can be detected at the detection element 26.

The reflecting unit 23 includes, for example, a MEMS (micro electro mechanical systems) mirror, a polygon mirror, or a galvanometer mirror.

The reflecting unit 23 may change the direction in which the electromagnetic waves are reflected based on control performed by the controller 24, which is described later. The reflecting unit 23 may include an angle sensor, such as an encoder, and the controller 24 may be notified of the angle detected by the angle sensor as direction information regarding the direction in which the electromagnetic waves are reflected. In this configuration, the controller 24 can calculate the irradiation position based on the direction information acquired from the reflecting unit 23. The controller 24 can calculate the irradiation position based on a driving signal input to the reflecting unit 23 to make the reflecting unit 23 change the direction in which the electromagnetic waves are reflected.

When the controller 24 calculates the irradiation position based on the direction information acquired from the reflecting unit 23 or the driving signal input to the reflecting unit 23, the reflecting unit 23 can be disposed so that the central axis thereof in the direction in which the electromagnetic waves are scanned is substantially parallel to and close to the optical axis of the image-capturing device 12.

The controller 24 includes one or more processors and memories. Such processors may include at least either of general-purpose processors into which specific programs are loaded in order to perform specific functions and dedicated processors dedicated to specific processing. Dedicated processors may include an application specific integrated circuit (ASIC). Processors may include PLDs (programmable logic devices). PLDs may include FPGAs (field-programmable gate arrays). The controller 24 may include at least either one of an SoC (system-on-a-chip) or an SiP (system in a package), in which one or more processors work together.

The controller 24 is configured to be able to control the reflecting unit 23 and the switching unit 32. The controller 24 can control the switching unit 32 so that the detection element 26 can acquire the reflected electromagnetic waves in accordance with the irradiation position and the irradiation time of the electromagnetic waves by the reflecting unit 23. The controller 24 can acquire detection information from the detection element 26 and calculate the distance, as described below. The controller 24 can generate point cloud data from each measurement position and the distance at that measurement position. The controller 24 can also acquire an image signal from the image-capturing element 28. The controller 24 can output the point cloud data and image signal to the information processing device 13.

The first optical system 25 causes reflected waves from the object ob, out of the electromagnetic waves irradiated from the irradiation unit 22 and reflected by the reflecting unit 23 toward the measurement range, to travel and be detected by the detection element 26. As described below, the optical axis of the first optical system 25 may be configured to coincide with the optical axis of the second optical system 27 on the object ob side.

The detection element 26 includes an element capable of detecting electromagnetic waves emitted from the irradiation unit 22. For example, the detection element 26 includes a single element such as an APD (avalanche photodiode) or a PD (photodiode). The detection element 26 may include an array of elements such as an APD array, a PD array, a distance measurement imaging array, or a distance measurement image sensor. In an embodiment, the detection element 26 transmits, as a signal to the controller 24, detection information indicating that the detection element 26 has detected reflected waves from a subject. The detection element 26 detects electromagnetic waves in the infrared band, for example.

In a configuration in which a single element constitutes the distance measurement sensor described above, the detection element 26 only needs to be able to detect electromagnetic waves and the object ob does not need to be imaged on a detection surface of the detection element 26. Therefore, the detection element 26 does not need to be provided at a secondary image formation position, which is an image formation position of a first latter-stage optical system 30 described below. In other words, in this configuration, the detection element 26 may be disposed anywhere along the path of the electromagnetic waves that have been made to travel in a first direction d1 by the switching unit 32 and then travel through the first latter-stage optical system 30, so long as electromagnetic waves from all angles of view can be made incident on the detection surface.

The controller 24 acquires the distance based on the electromagnetic waves detected by the detection element 26. Based on the detection information detected by the detection element 26, the controller 24 acquires the distance of the irradiation position irradiated by the irradiation unit 22 using a ToF (time-of-flight) method, as described below.

The controller 24 inputs an electromagnetic wave radiation signal to the irradiation unit 22, and this causes the irradiation unit 22 to radiate pulsed electromagnetic waves. The irradiation unit 22 performs irradiation with electromagnetic waves based on the electromagnetic wave radiation signal input thereto. The electromagnetic waves radiated by the irradiation unit 22, reflected by the reflecting unit 23, and irradiating any irradiation region are reflected in that irradiation region. Upon detecting the reflected electromagnetic waves in the irradiation region, the detection element 26 notifies the controller 24 of the detection information.

The controller 24 measures the time from the time when the irradiation unit 22 radiates the electromagnetic waves to the time when the controller 24 acquires the detection information. The controller 24 calculates the distance to a irradiation position by multiplying the time by the speed of light and dividing by two. When the detection element 26 is a single element, the controller 24 calculates the irradiation position based on direction information acquired from the reflecting unit 23 or a driving signal output from the controller 24 to the reflecting unit 23, as described above. If the detection element 26 includes an array of elements, the controller 24 can calculate the irradiation position based on the position where the electromagnetic waves reflected by the object ob are detected on the element array. As mentioned above, the irradiation position is the measurement position of the distance-measuring device 11. The controller 24 creates point cloud data that includes information on multiple measurement positions and distances by calculating the distance to each irradiation position while changing the irradiation position.

### (Configuration of Image-Capturing Device)

The second optical system 27 forms an image of the object ob on an imaging surface of the image-capturing element 28 in a range overlapping the measurement range of the distance-measuring device 11.

The image-capturing element 28 converts the image formed on the imaging surface into an electrical signal and generates an image of the captured range including the object ob. The image-capturing element 28 may include any of a CCD image sensor (charge-coupled device image sensor) and a CMOS image sensor (complementary MOS image sensor).

The image-capturing element 28 outputs the generated image to the controller 24. The controller 24 may perform any processing on the image, such as distortion correction, brightness adjustment, contrast adjustment, gamma correction, and so on.

If at least any one of the point cloud data and images contain distortion, controller 24 may correct the distortion. If there is a misalignment between the optical system for detecting point cloud data and the optical system for capturing images, the controller 24 may correct at least any of the point cloud data and images to reduce the effect of the misalignment. Such correction of point cloud data and images may be performed by the information processing device 13 instead of the controller 24.

### (Configurations of Optical Systems and Switching Unit)

The first optical system 25 includes a former-stage optical system 29, which is common to the second optical system 27, and the first latter-stage optical system 30, which is positioned after the switching unit 32. The second optical system 27 includes the former-stage optical system 29, which is common to the first optical system 25, and a second latter-stage optical system 31, which is positioned after the switching unit 32. The former-stage optical system 29 includes, for example, at least one of a lens or a mirror and forms an image of the object ob, which is the subject.

The switching unit 32 may be provided at or near a primary image-forming position, which is the image-forming position of the former-stage optical system 29, of an image of the object ob at a prescribed distance from the former-stage optical system 29. The switching unit 32 has an action surface as on which the electromagnetic waves that have passed through the former-stage optical system 29 are incident. The action surface as is constituted by multiple pixels px arranged in a two-dimensional pattern. The action surface as is a surface that produces an action, such as reflection or transmission, on electromagnetic waves in at least one of a first state or a second state, as described later.

The switching unit 32 can switch each pixel px between a first state in which the electromagnetic waves incident on the action surface as are made to travel in the first direction d1 and a second state in which the electromagnetic waves incident on the action surface as are made to travel in a second direction d2. The first state is a first reflection state in which the electromagnetic waves incident on the action surface as are reflected in the first direction d1. The second state is a second reflection state in which the electromagnetic waves incident on the action surface as are reflected in the second direction d2.

The switching unit 32 more specifically includes a reflective surface that reflects electromagnetic waves at each pixel px. The switching unit 32 switches between the first reflection state and the second reflection state for each pixel px by changing the orientation of the reflective surface for each pixel px. In an embodiment, the switching unit 32 includes a DMD (digital micromirror device), for example. The DMD can switch the reflective surface in each pixel px to either a +12° or -12° inclination with respect to the action surface as by driving small reflective surfaces constituting the action surface as. The action surface as may be parallel to the substrate surface of the substrate on which the small reflective surfaces of the DMD are installed.

The switching unit 32 switches between the first state and the second state for each pixel px based on control performed by the controller 24. For example, the switching unit 32 can simultaneously switch some pixels px1 to the first state to cause the electromagnetic waves incident on those pixels px1 to travel in the first direction d1, and switch some other pixels px2 to the second state to cause the electromagnetic waves incident on those pixels px2 to travel in the second direction d2. By switching the same pixels px from the first state to the second state, the switching unit 32 can cause the electromagnetic waves incident on those pixels px to first travel in the first direction d1 and then to travel the second direction d2.

As illustrated in FIG. 2, the first latter-stage optical system 30 is provided in the first direction d1 from the switching unit 32. The first latter-stage optical system 30 includes, for example, at least one of a lens or a mirror. The first latter-stage optical system 30 causes the electromagnetic waves, whose direction of travel has been switched by the switching unit 32, to be incident on the detection element 26.

The second latter-stage optical system 31 is provided in the second direction d2 from the switching unit 32. The second latter-stage optical system 31 includes, for example, at least one of a lens or a mirror. The second latter-stage optical system 31 forms an image of the object ob, from the electromagnetic waves whose direction of travel has been switched by the switching unit 32, on the imaging surface of the image-capturing element 28.

With the above configuration, the detection device 21 can align the optical axis ax of the former-stage optical system 29 with the optical axis of the first latter-stage optical system 30 in the first state and with the optical axis of the second latter-stage optical system 31 in the second state. Therefore, by switching the pixels px in the switching unit 32 to either the first state or the second state, the detection device 21 can reduce disparity between measurement positions where the detection element 26 detects distance and the image formed by the image-capturing element 28 when the detection element 26 is an element array.

The controller 24 can switch some pixels px in the switching unit 32 to the first state and some other pixels px to the second state as the irradiation position is moved by the reflecting unit 23. Thus, the detection device 21 can allow the detection element 26 to detect the electromagnetic waves at some pixels px while simultaneously causing the image-capturing element 28 to detect an image at some other pixels px. In this way, the detection device 21 can acquire the distance of the irradiation position in the same field of view and an image of the area excluding the vicinity of the irradiation position of the electromagnetic waves at substantially the same time.

In the example configuration in FIG. 2, an optical system including the switching unit 32 is used to bring the optical axis of the distance-measuring device 11 for measuring distance and the optical axis of the image-capturing device 12 into alignment or close to alignment. However, the method of bringing the optical axes of the distance-measuring device 11 and the image-capturing device 12 into alignment or close to alignment is not limited to this method. For example, the optical system 14 in FIG. 1 can be configured to use a difference in wavelength between light detected by the distance-measuring device 11 and an image captured by the image-capturing device 12. For example, the optical system 14 can be configured to align the optical axis of the optical system of the distance-measuring device 11 and the optical axis of the image-capturing device 12 on the object ob side using a dichroic mirror or dichroic prism.

### (Information Processing Device)

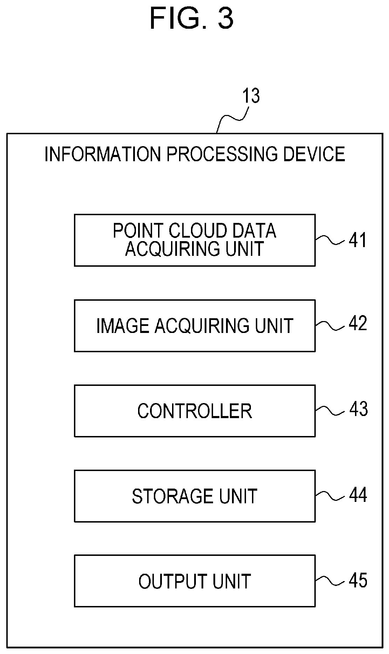

In an embodiment, as illustrated in FIG. 3, the information processing device 13 includes a point cloud data acquiring unit 41, an image acquiring unit 42, a controller 43, a storage unit 44, and an output unit 45.

The point cloud data acquiring unit 41 acquires point cloud data representing a distance distribution from the distance-measuring device 11. The point cloud data acquiring unit 41 may include a communication module that communicates with the distance-measuring device 11. In the case of the detection device 21 in FIG. 2, the point cloud data acquiring unit 41 acquires point cloud data from the controller 24, which is part of the distance-measuring device 11. The point cloud data includes at least two-dimensional position information representing a measurement position when the measurement range is regarded as a two-dimensional plane and a measured value of the distance to the object ob located at that position.

The image acquiring unit 42 acquires an image from the image-capturing device 12. The image acquiring unit 42 may include a communication module that communicates with the image-capturing device 12. In the case of the detection device 21 in FIG. 2, the image acquiring unit 42 acquires an image from the controller 24, which is part of the image-capturing device 12. The time at which the distance-measuring device 11 acquires the point cloud data and the time at which the image-capturing device 12 captures the image may be synchronized.

The controller 43 includes one or more processors and memories, similarly to the controller 24 of the detection device 21. Similarly to the controller 24 of the detection device 21, the controller 43 may include at least either of a general-purpose processor into which specific programs are loaded in order to perform specific functions and a dedicated processor dedicated to specific processing.

The controller 43 can acquire point cloud data and images in which the capturing range at least partially overlaps the measurement range when regarded as a two-dimensional plane. The controller 43 can acquire point cloud data and an image measured and captured at substantially the same time as one set of data. Substantially the same time includes a case where the time at which the distance-measuring device 11 measures point cloud data of one frame and the time at which the image-capturing device 12 captures an image overlap. Substantially the same time also includes a case where the distance-measuring device 11 and the image-capturing device 12 perform distance measurement and image-capturing based on the same timing signal.

The controller 43 can successively acquire two sets of point cloud data and an image. The controller 43 can regard first set of point cloud data and an image as first point cloud data and a first image, and a second set of point cloud data and an image as second point cloud data and a second image. The controller 43 can calculate information representing a correspondence relationship between positions in the first image and positions the second image, and associations can be created between the first point cloud data and the second point cloud data based on the information representing this correspondence relationship. Creating associations between the first point cloud data and the second point cloud data means associating data of each point contained in the first point cloud data with data of a corresponding point contained in the second point cloud data. By using the information representing the correspondence relationship between positions in the first image and positions in the second image, points in the first point cloud data and the second point cloud data that are associated with each other are not limited to points located at the feature points in the first image and the second image. In this embodiment, the posture estimation system 10 is configured so that the controller 43 calculates information representing a correspondence relationship between positions in the first image and positions in the second image, but the posture estimation system 10 may be configured to cause such information to be calculated by an information processing device on a network such as a server or the cloud, and so that the controller 43 acquires the information calculated by the information processing device.

The controller 43 can estimate the amount of rotation and the amount of movement of the distance-measuring device 11 and the image-capturing device 12 based on the associations between the first point cloud data and the second point cloud data. In other words, the controller 43 can perform posture estimation for the mobile object. The controller 43 can construct a map of the surrounding environment from the successively acquired point cloud data and estimated rotation amount and movement amount information, and can estimate its own position within the environment map.

The storage unit 44 includes a semiconductor memory and/or a magnetic memory. The storage unit 44 may function as a main storage device, an auxiliary storage device, or a cache memory. The storage unit 44 stores any information used in the operation of the information processing device 13. For example, the storage unit 44 may store system programs, application programs, management databases, and so on. The storage unit 44 can temporarily store point cloud data acquired by the point cloud data acquiring unit 41, images acquired by the image acquiring unit 42, and information obtained from processing the point cloud data and images.

The storage unit 44 may successively accumulate and store the coordinates of point cloud data located in the surrounding environment, as well as amounts of rotation and amounts of movement. The storage unit 44 may store environment maps successively constructed by the controller 43.

The output unit 45 is configured to be able to output information from the information processing device 13 to the outside. The output unit 45 includes any one or more of the following: a display, a communication module that transmits information to an external computer, a device that outputs information to a storage medium, and so on. The output unit 45 may output the constructed environment map and the estimated own-position information to other systems of the mobile object in which the information processing device 13 is installed through electrical lines.

In FIG. 2, the detection device 21 and the information processing device 13 are separate devices. However, the information processing device 13 may be incorporated into the same hardware as the detection device 21 in FIG. 2. The controller 43 of the information processing device 13 may be used in a shared manner as the controller 24 of the detection device 21 as well.

### (Posture Estimation Processing)

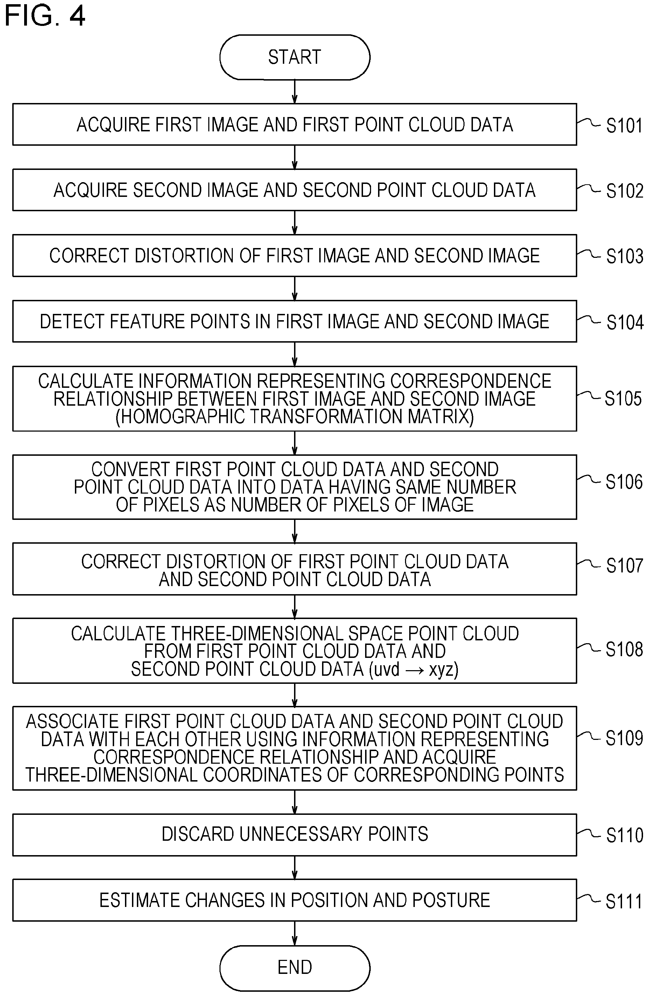

Hereafter, posture estimation processing performed by the controller 43 will be described using the flowchart in FIG. 4. The information processing device 13 may be configured to implement the processing performed by the controller 43 described below by reading a program recorded on a non-transitory computer-readable medium. Non-transitory computer readable media include, but are not limited to, magnetic storage media, optical storage media, magneto-optical storage media, and semiconductor storage media.

The controller 43 acquires the first image and the first point cloud data via the image acquiring unit 42 and the point cloud data acquiring unit 41 (Step S101). The viewpoints from which the first image and the first point cloud data are captured and measured coincide or are close to each other. If the measurement range of the distance-measuring device 11 and the capturing range of the image-capturing device 12 only partially overlap, the first image and the first point cloud data used in the following processing are acquired from the overlapping part. This similarly applies to the second image and the second point cloud data.

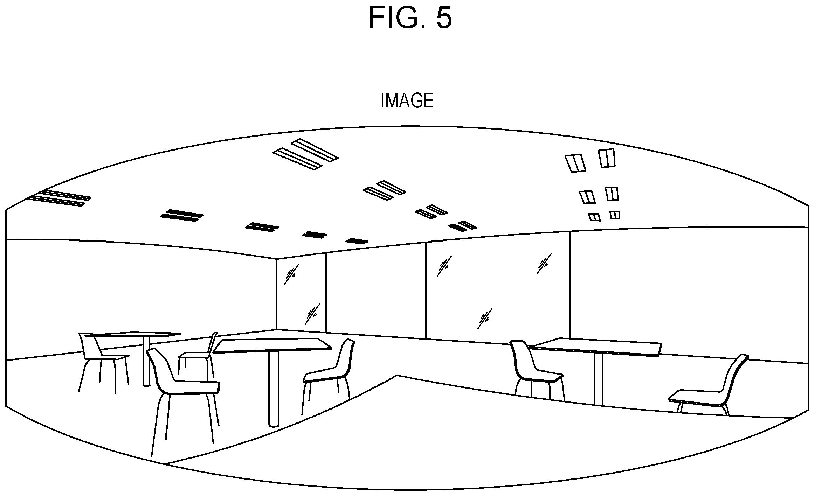

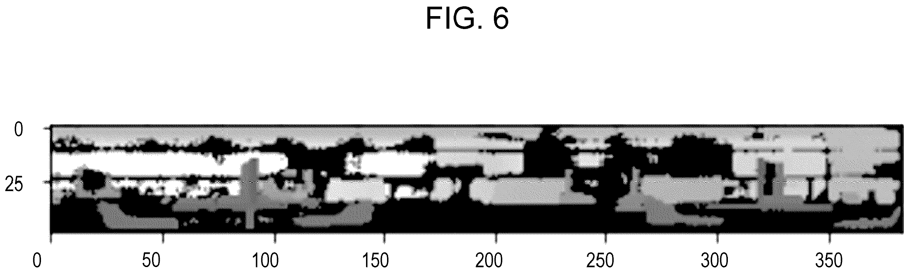

FIG. 5 illustrates an example of an image acquired by the image acquiring unit 42. FIG. 6 illustrates an example in which point cloud data acquired by the point cloud data acquiring unit 41 is displayed as a two-dimensional distance image. In the distance image, the distance to each measurement position within the field of view of the distance-measuring device 11 represented in two-dimensional space is expressed by the color or luminance at each point representing a corresponding measurement position.

After Step S101, the controller 43 acquires the second image and the second point cloud data via the image acquiring unit 42 and the point cloud data acquiring unit 41 (Step S102). Due to rotation and movement of the mobile object in which the distance-measuring device 11 and the image-capturing device 12 are installed, the viewpoints from which the second image and the second point cloud data are captured and measured are different from the viewpoints from which the first image and the first point cloud data are captured and measured. As a result, the capturing range of the second image and the capturing range of the first image are shifted from each other, but partially overlap. In addition, the measurement range of the second point cloud data and the measurement range of the first point cloud data are shifted from each other, but partially overlap.

The first image and the first point cloud data may be captured and measured at a first time, and the second image and the second point cloud data may be captured and measured at a second time subsequent to the first time. The controller 43 may successively acquire an image and point cloud data captured and measured simultaneously after the second time. Hereafter, the set of the first image and the first point cloud data and the set of the second image and the second point cloud data are acquired and the amount of rotation and the amount of movement occurring between the first time and the second time are estimated. The amount of rotation and the amount of movement occurring after the second time can be successively estimated in substantially the same manner. The first image and the first point cloud data do not necessarily need to be captured and measured at the same time. If there is no change in the capturing range over which the first image is captured and the measurement range over which the first point cloud data is acquired, the capturing of the first image and the measurement of the first point cloud data can be performed successively at different times. This similarly applies to the second image and the second point cloud data.

The following Steps S103 to S105 and Steps S106 to S108 are each a series of processing operations. Steps S103 to S 105 are processing operations carried out on the first image and the second image. Steps S106 to S108 are processing operations carried out on the first point cloud data and the second point cloud data. Steps S103 to S105 and Steps S106 to S 108 may be interchanged with each other or performed in parallel.

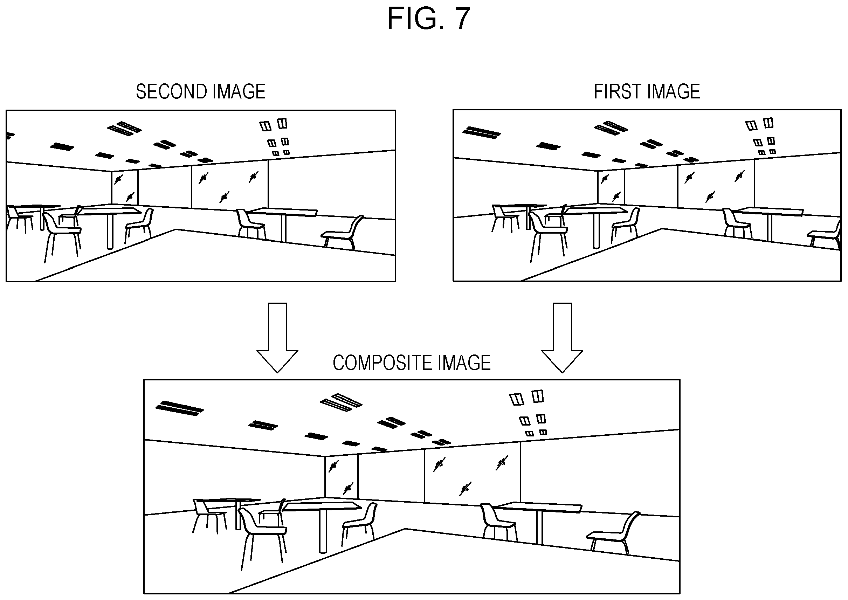

After Step S102, if there is distortion in the acquired first image and second image, the controller 43 performs correction in order to decrease the distortion (Step S 103). For example, the first image and the second image may have barrel distortion, as illustrated in FIG. 5, caused by the lens and so forth of the image-capturing device 12. The controller 43 can correct the distortion so that the images become rectangular. By correcting the distortion, the first image and the second image as illustrated in the upper part of FIG. 7 for example are obtained.

Next, the controller 43 extracts feature points of the first image and the second image (Step S104). For example, various methods including SHIFT (scale-invariant feature transform), SURF (speeded up robust features), and ORB (orientated FAST and rotated BRIEF) can be used as a method to extract feature points. RANSAC (random sample consensus) is a known method for excluding the effects of outliers resulting from noise and so forth when extracting feature points.

The controller 43 calculates information representing the correspondence relationship between the first image and the second image using the feature points (Step S 105). The controller 43 can obtain a pixel-by-pixel correspondence relationship between the first image and the second image by overlapping the images by matching feature points using a panoramic image creation technique. For example, the controller 43 can overlap the feature points of the second image on the feature points of the first image by performing a homographic transformation on the second image. The controller 43 calculates the transformation matrix of the homographic transformation from the feature points of the first image and the feature points of the second image. In this case, the transformation matrix of the homographic transformation is information representing the correspondence relationship between the first image and the second image.

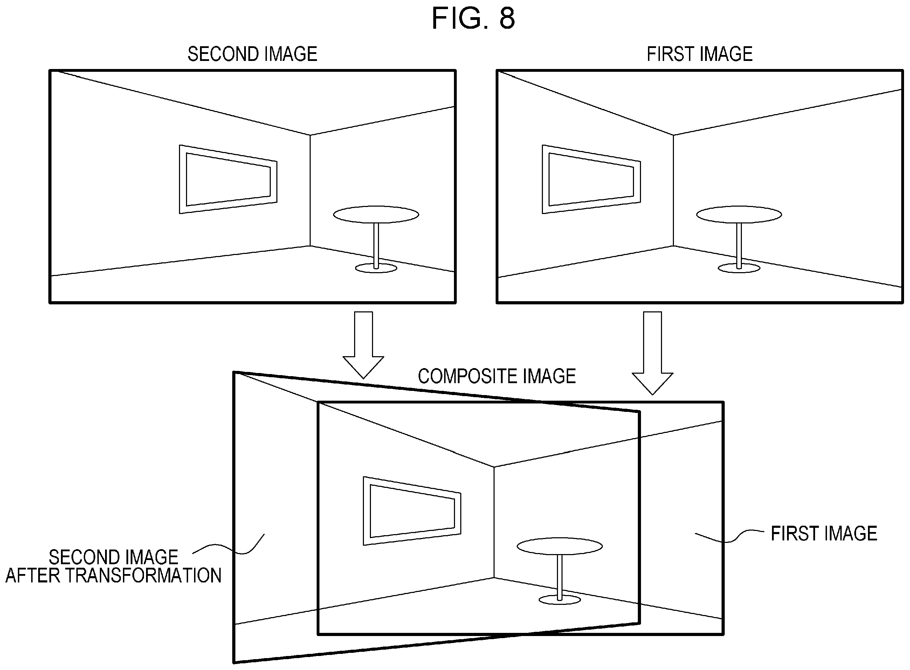

By using the information representing the correspondence relationship between the first image and the second image, the first image and the second image can be combined with each other, as illustrated in FIG. 7. FIG. 7 is an image of an office interior in which desks, chairs, etc. are disposed. FIG. 8 illustrates a simple drawing of a composite image created from the first image and the second image using a homographic transformation. In the example in FIG. 8, the rectangular second image is transformed into a trapezoidal shape and projected onto the coordinate system of the first image in order to match the feature points. The transformation matrix of the homographic transformation may be estimated using the least-squares method so as to minimize the error between the feature points when the feature points of the first image are matched with the feature points of the second image using the homographic transformation.

Next, Steps S106 to S108 will be described.

The number of measurement points (corresponding to points in the point cloud data) that the distance-measuring device 11 can acquire in one scan is less than the number of pixels in an image captured by the image-capturing device 12. Therefore, the controller 43 performs processing to convert the first point cloud data and the second point cloud data into data having the same number of pixels as the number of pixels in the image (Step S106). The controller 43 converts the number of vertical and horizontal points in the first point cloud data and the second point cloud data to match the number of vertical and horizontal pixels in the first image and the second image. Each pixel in the first image and the second image is then respectively associated with any of the points in the first point cloud data and the second point cloud data.

Next, if the expanded first point cloud data and second point cloud data contain distortion, the controller 43 corrects the distortion (Step S107). This correction of distortion may be performed before Step S106 or after Step S 108 described below, rather than after Step S106.

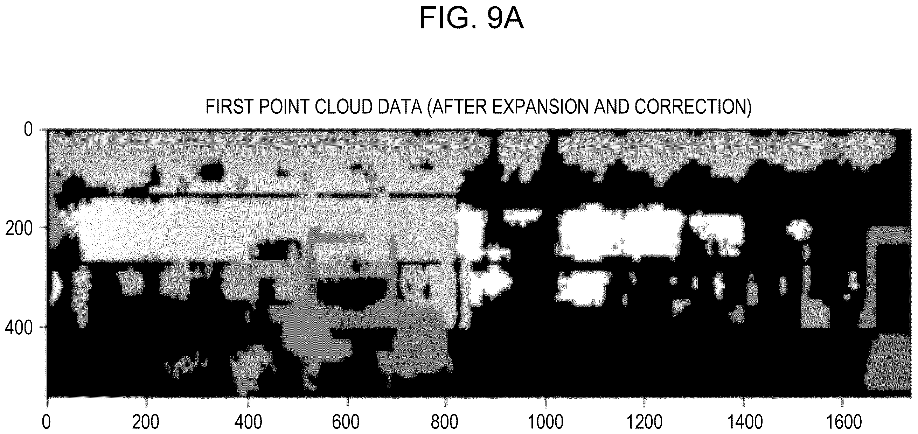

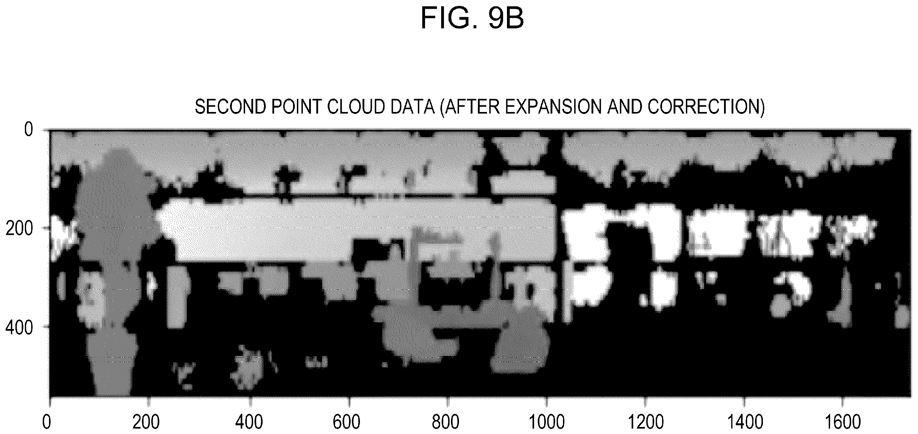

FIG. 9A and FIG. 9B illustrate examples of the first point cloud data and the second point cloud data as distance images after expansion and distortion correction. As is clear from FIG. 9A and FIG. 9B, the edges of a subject are difficult to detect with point cloud data as is the case in an image. On the other hand, with point cloud data, distance data for measurement points on flat areas such as walls is easily acquired. The point cloud data in FIG. 9A and FIG. 9B are illustrated as examples. In FIG. 9A and FIG. 9B, the interior of an office containing desks and chairs, etc. is measured similarly to as in FIG. 7, but a different scene from the first and second images illustrated in FIG. 7 is measured.

Next, the controller 43 calculates point clouds in a three-dimensional space from the expanded and distortion-corrected first point cloud data and second point cloud data, respectively (Step S 108). In other words, the controller 43 converts point cloud data (u, v, d) of a two-dimensional space, consisting of two-dimensional coordinates (u, v) representing the position of each point in the point cloud data and the distance d of each point, into coordinates (x, y, z) of points in a three-dimensional space. The coordinates (x, y, z) in the three-dimensional space are the measurement position where measurement is performed by the distance-measuring device 11 in three-dimensional space. Here, the three-dimensional coordinates (x, y, z) can be, for example, coordinates of a coordinate system in which the position of the distance-measuring device 11 is the origin, the direction of the optical system with which the distance-measuring device 11 detects the object ob is the z axis, and two axes perpendicular to the z axis and perpendicular to each other are the x and y axes. The coordinate axes of this three-dimensional space are fixed with respect to the distance-measuring device 11 and rotate and move as the distance-measuring device 11 rotates and moves.

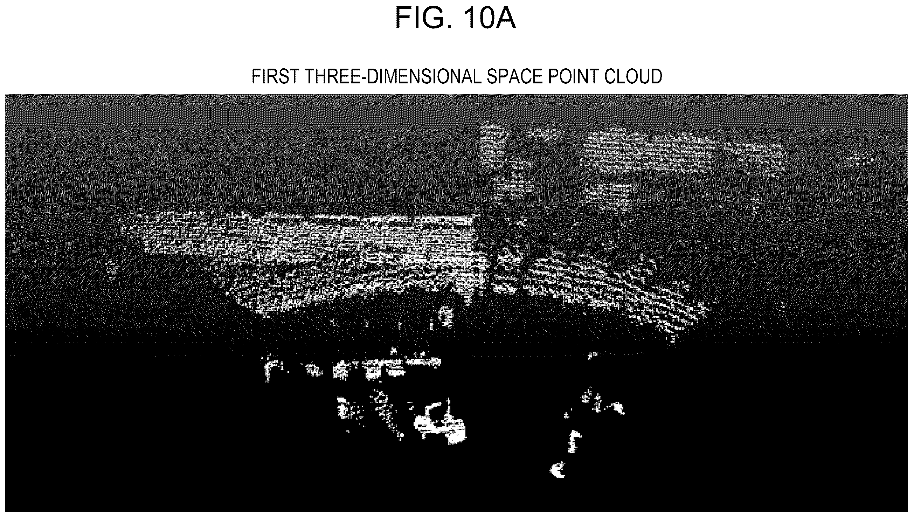

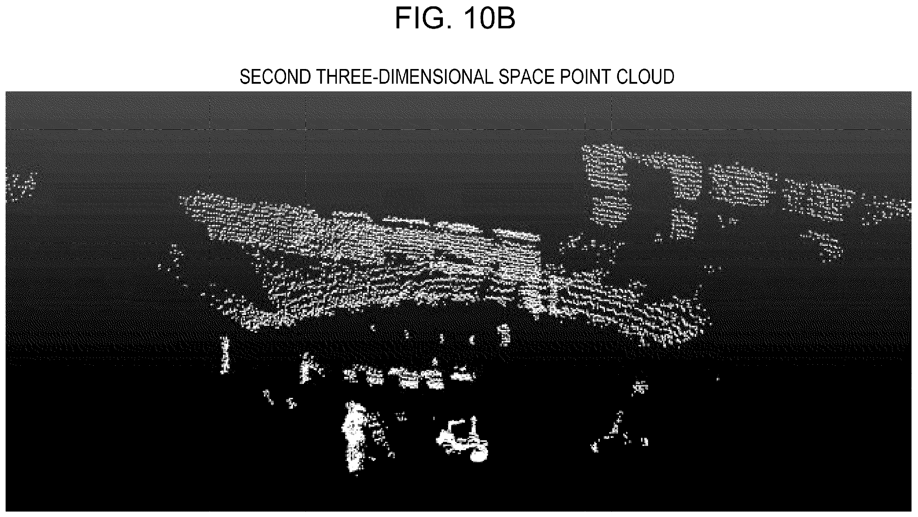

FIGs. 10A and 10B illustrate the point clouds in three-dimensional space calculated based on the first point cloud data and the second point cloud data corresponding to FIG. 9A and FIG. 9B, respectively, as viewed from a particular direction. FIGs. 10A and 10B illustrate the overlapping measurement range observed from different viewpoints.

Next, the controller 43 creates associations between the first point cloud data and the second point cloud data using the information representing the correspondence relationship between the first image and the second image calculated in Step S105 and acquires the coordinates of the corresponding points in three-dimensional space (Step S 109). Step S109 is described below in two steps.

First, the controller 43 creates associations between the points of the two-dimensional first point cloud data and the points of the two-dimensional second point cloud data, which have an arrangement of points the same as the pixel arrangement of the first image and the second image, as illustrated in FIG. 9A and 9B. The controller 43 extracts the points of the first point cloud data and the points of the second point cloud data that are located at positions (u, v) corresponding to each other based on the information representing the correspondence relationship calculated in Step S105. For example, if the controller 43 calculated a transformation matrix that homographically transforms the second image into the first image in Step S105, the controller 43 applies this transformation matrix to each point of the two-dimensional second point cloud data. The controller 43 extracts the points of the first point cloud data whose positions (u, v) match the points of the transformed second point cloud data. When an extracted point of the first point cloud data and an extracted point of the second point cloud data have distances d that are approximately equal to each other, taking into account errors and the range of movable distances, the two points can be judged to correspond to each other. In this method, the correspondence relationship is examined for all points in the first point cloud data and all points in the second point cloud data based on the information representing the correspondence relationship. Therefore, a much larger number of points can be associated with each other compared to when associations are made in point cloud data using only the feature points of images.

Next, the controller 43 acquires the coordinates (x, y, z) in three-dimensional space of points respectively corresponding to the points (u, v, d) of the first point cloud data and the points (u, v, d) of the second point cloud data, which have been associated with each other in two-dimensional space. The coordinates (x, y, z) in the three-dimensional space corresponding to the points in the two-dimensional point cloud data are calculated in Step S108. These coordinates (x, y, z) are the coordinates of the points in the first point cloud data and the points in second point cloud data that correspond to each other, represented by coordinates in three-dimensional space.

The controller 43 excludes unnecessary points from the set of corresponding points represented by the coordinates (x, y, z) in the three-dimensional space (Step S110). For example, points for which the distance is calculated to be zero are deleted. Points that are determined to be abnormalities may be deleted.

The controller 43 estimates the posture of the posture estimation system 10 and the mobile object in which the posture estimation system 10 is installed using the coordinates of corresponding points in three-dimensional space (Step S111). Posture estimation can be performed by determining the rotation matrix and translation vector so as to minimize the distance between each set of corresponding points in the first point cloud data and second point cloud data. For example, the coordinates of the corresponding points in the first point cloud data are pᵢ(i = 1, 2,..., n), and the coordinates of the corresponding points in the second point cloud data are qᵢ(i = 1, 2,..., n). Here, n is the number of corresponding points in each set of point cloud data. R is the desired rotation matrix, and t is the desired translation vector. The rotation matrix R and the translation vector t are obtained using the following Equation (1). [Math. 1] $min {\sum }_{i = 1}^{n} {\left‖{q}_{i}-\left({Rp}_{i}+t\right)\right‖}^{2}$

As described above, the controller 43 can calculate the amount of rotation and the amount of movement of the mobile object between the first time and the second time in order to estimate the posture.

The controller 43 can successively acquire point cloud data measured by the distance-measuring device 11 and images captured by the image-capturing device 12 as the position and posture of the mobile object successively change. Based on the estimated amount of rotation and amount of movement of the mobile object, the controller 43 can reconstruct the information of the measured point cloud data in a global coordinate system and construct an environment map. The controller 43 can estimate the mobile object's own position and posture in the constructed global coordinate system environment map.

According to the posture estimation system 10 using the information processing device 13 of the present disclosure, corresponding points in the first point cloud data and the second point cloud data can be extracted using information representing the correspondence relationship between the first image and the second image, and therefore a great number of corresponding points can be extracted. This improves the accuracy of posture estimation. Furthermore, when an environment map is constructed using this posture estimation system 10, since the accuracy of posture estimation is improved, the accumulation of errors in the posture estimation can be reduced, and therefore a more accurate environment map can be constructed.

### (Comparative Experiment)

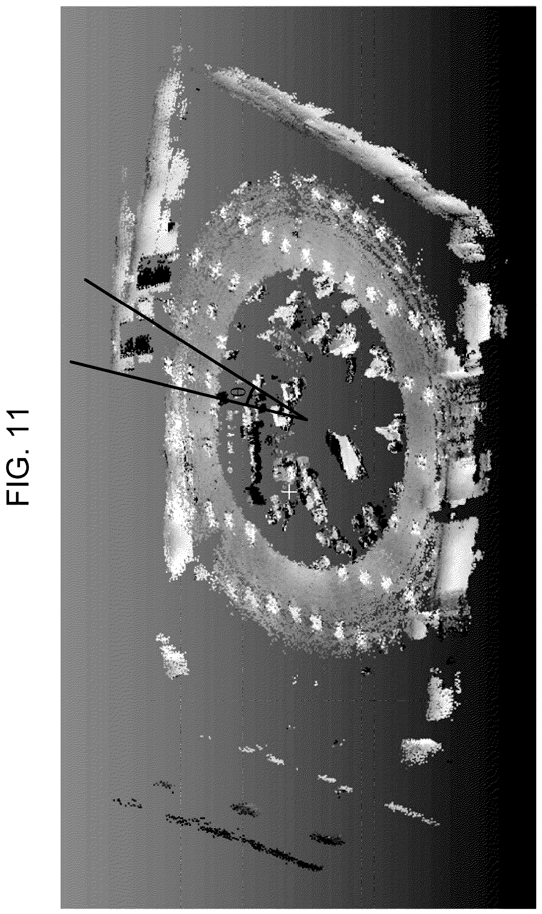

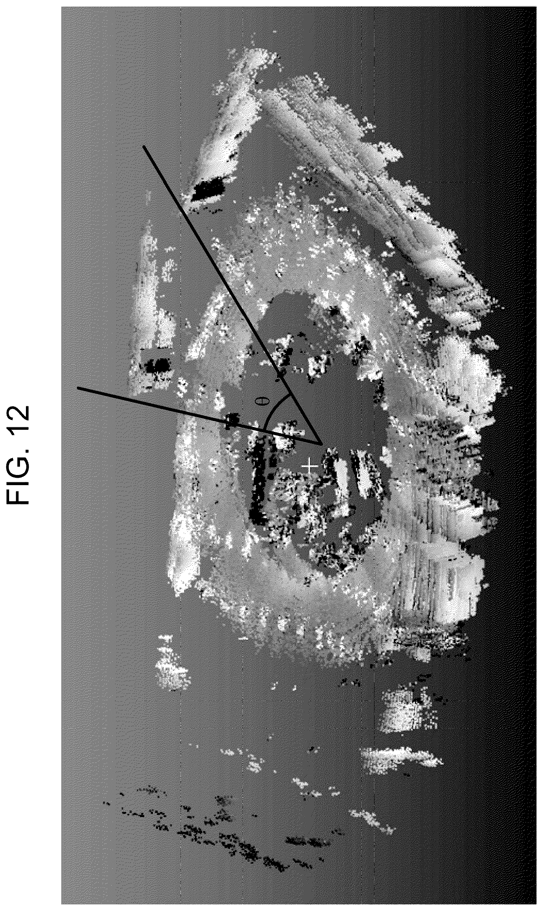

The present inventors prepared point cloud data and images measured and captured by rotating the mobile object equipped with the posture estimation system 10 through a total of 360 degrees in 10 degree intervals in a horizontal plane, and created an environment map using the method of the present disclosure. In addition, as a comparative example, the present inventors created an environment map for the same point cloud data and images by extracting feature points from the images using ORB and using these feature points to create associations between the point cloud data. FIG. 11 is an environment map constructed using the method of the present disclosure. FIG. 12 is an environment map constructed using the method of the comparative example. In both cases, the angle θ is the error in the amount of rotation accumulated as a result of rotation through 360 degrees.

From FIGs. 11 and 12, we can see that the method of the present disclosure has a smaller accumulation of errors and better accuracy than the method of the comparative example.

The present inventors also performed posture estimation for data from which outliers had been excluded using RANSAC for feature points obtained using ORB. The method of the present disclosure demonstrated a marked improvement in accuracy over this method as well.

As described above, the information processing device 13 of the present disclosure can easily create associations between the first point cloud data and the second point cloud data acquired by the distance-measuring device 11 from different viewpoints for a greater number of points. This improves the accuracy of posture estimation of the mobile object. Furthermore, the improved accuracy of the posture estimation results in the accuracy of environment map construction and own-position estimation being improved.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions and so forth included in each component or step can be rearranged in a logically consistent manner, and a plurality of components or steps can be combined into a single component or step or a single component or step can be divided into a plurality of components or steps. The embodiments of the present disclosure can also be realized as a method executed by a processor included in a device, a program, or a storage medium recording the program. Please understand that the scope of the present disclosure also includes these forms.

### REFERENCE SIGNS

- 10: posture estimation system
- 11: distance-measuring device
- 12: image-capturing device
- 13: information processing device
- 14: optical system
- 21: detection device
- 22: irradiation unit
- 23: reflecting unit
- 24: controller
- 25: first optical system
- 26: detection element
- 27: second optical system
- 28: image-capturing element
- 29: former-stage optical system
- 30: first latter-stage optical system
- 31: second latter-stage optical system
- 32: switching unit
- 41: point cloud data acquiring unit
- 42: image acquiring unit
- 43: controller
- 44: storage unit
- ax: optical axis
- d1: first direction
- d2: second direction
- ob: object (subject)

## Claims

1. An information processing device (13) comprising:
an image acquiring unit (42) configured to acquire an image from an image-capturing device (12);
a point cloud data acquiring unit (41) configured to acquire point cloud data representing a distance distribution from a distance-measuring device (11), wherein an optical axis of an optical system (14) used by the image-capturing device (12) to capture an image and an optical axis of an optical system (14) used by the distance-measuring device (11) to measure the distance distribution coincide with each other; and
a controller (43) configured to, based on a first image and a second image acquired from the image acquiring unit (42) and captured by the image-capturing device, the second image containing an identical subject to the first image, acquire a transformation matrix of a homographic transformation representing a correspondence relationship between positions in the first image and the second image, wherein the controller (43) is configured to calculate the transformation matrix of the homographic transformation representing the correspondence relationship by performing matching of feature points contained in the first image and the second image and based on the transformation matrix of the homographic transformation, create associations between two sets of point cloud data acquired from the point cloud data acquiring unit (41), the two sets of point cloud data consisting of first point cloud data in which a capturing range of the first image and a measurement range of the distance distribution at least partially overlap and second point cloud data in which a capturing range of the second image and a measurement range of the distance distribution at least partially overlap.

2. The information processing device (13) according to claim 1,
wherein the controller (43) estimates an amount of rotation and an amount of movement of the image-capturing device (12) or the distance-measuring device (11) based on the associations between the first point cloud data and the second point cloud data.

3. The information processing device (13) according to claim 1 or 2,
wherein the image-capturing device (12) and the distance-measuring device (11) are configured to capture the first image and measure the distance distribution for acquiring the first point cloud data simultaneously, and to capture the second image and measure the distance distribution for acquiring the second point cloud data simultaneously.

4. An information processing method comprising:
acquiring a first image and a second image, containing an identical subject to the first image, captured by an image-capturing device;
acquiring two sets of point cloud data representing a distance distribution, the two sets of point cloud data consisting of first point cloud data in which a capturing range of the first image and a measurement range of the distance distribution at least partially overlap and second point cloud data in which a capturing range of the second image and a measurement range of the distance distribution at least partially overlap, wherein an optical axis of an optical system used by the image-capturing device to capture the first image and the second image and an optical axis of an optical system used by a distance-measuring device to measure the distance distribution coincide with each other;
acquiring a transformation matrix of a homographic transformation representing a correspondence relationship between positions in the first image and the second image based on the first image and the second image wherein the transformation matrix of the homographic transformation representing the correspondence relationship is calculated by performing matching of feature points contained in the first image and the second image; and
creating associations between the first point cloud data and the second point cloud data based on the transformation matrix of the homographic transformation.

5. A program for causing a computer to execute processing comprising:
acquiring a first image and a second image, containing an identical subject to the first image, captured by an image-capturing device;
acquiring two sets of point cloud data representing a distance distribution, the two sets of point cloud data consisting of first point cloud data in which a capturing range of the first image and a measurement range of the distance distribution at least partially overlap and second point cloud data in which a capturing range of the second image and a measurement range of the distance distribution at least partially overlap, wherein an optical axis of an optical system used by the image-capturing device to capture the first image and the second image and an optical axis of an optical system used by a distance-measuring device to measure the distance distribution coincide with each other;
acquiring a transformation matrix of a homographic transformation representing a correspondence relationship between positions in the first image and the second image based on the first image and the second image wherein the transformation matrix of the homographic transformation representing the correspondence relationship is calculated by performing matching of feature points contained in the first image and the second image; and
creating associations between the first point cloud data and the second point cloud data based on the transformation matrix of the homographic transformation representing the correspondence relationship.

## Patentansprüche

1. Informationsverarbeitungsvorrichtung (13), aufweisend:
eine Bilderlangungseinheit (42), die konfiguriert ist, um ein Bild von einer Bildaufnahmevorrichtung (12) zu erlangen;
eine Punktwolkendaten-Erlangungseinheit (41), die konfiguriert ist, um Punktwolkendaten, die eine Abstandsverteilung darstellen, von einer Abstandsmessvorrichtung (11) zu erlangen, wobei eine optische Achse eines optischen Systems (14), das von der Bildaufnahmevorrichtung (12) zum Aufnehmen eines Bildes verwendet wird, und eine optische Achse eines optischen Systems (14), das von der Abstandsmessvorrichtung (11) zum Messen der Abstandsverteilung verwendet wird, miteinander übereinstimmen; und
eine Steuereinrichtung (43), die konfiguriert ist, um basierend auf einem ersten Bild und einem zweiten Bild, die von der Bilderlangungseinheit (42) erlangt und von der Bildaufnahmevorrichtung aufgenommen werden, wobei das zweite Bild ein mit dem ersten Bild identisches Motiv enthält, eine Transformationsmatrix einer homografischen Transformation zu erlangen, die eine Korrespondenzbeziehung zwischen Positionen im ersten Bild und im zweiten Bild darstellt, wobei die Steuereinrichtung (43) konfiguriert ist, um die Transformationsmatrix der homografischen Transformation, die die Korrespondenzbeziehung darstellt, durch Durchführen eines Abgleichens von Merkmalspunkten, die im ersten Bild und im zweiten Bild enthalten sind, zu berechnen und basierend auf der Transformationsmatrix der homografischen Transformation Assoziationen zwischen zwei Sätzen von Punktwolkendaten zu erstellen, die von der Punktwolkendaten-Erlangungseinheit (41) erlangt werden, wobei die beiden Sätze von Punktwolkendaten aus ersten Punktwolkendaten, bei denen sich ein Aufnahmebereich des ersten Bildes und ein Messbereich der Abstandsverteilung zumindest teilweise überlappen, und aus zweiten Punktwolkendaten bestehen, bei denen sich ein Aufnahmebereich des zweiten Bildes und ein Messbereich der Abstandsverteilung zumindest teilweise überlappen.

2. Informationsverarbeitungsvorrichtung (13) gemäß Anspruch 1,
wobei die Steuereinrichtung (43) einen Drehbetrag und einen Bewegungsbetrag der Bildaufnahmevorrichtung (12) oder der Abstandsmessvorrichtung (11) basierend auf den Assoziationen zwischen den ersten Punktwolkendaten und den zweiten Punktwolkendaten schätzt.

3. Informationsverarbeitungsvorrichtung (13) gemäß Anspruch 1 oder 2,
wobei die Bildaufnahmevorrichtung (12) und die Abstandsmessvorrichtung (11) konfiguriert sind, um das erste Bild aufzunehmen und die Abstandsverteilung zum Erlangen der ersten Punktwolkendaten gleichzeitig zu messen sowie das zweite Bild aufzunehmen und die Abstandsverteilung zum Erlangen der zweiten Punktwolkendaten gleichzeitig zu messen.

4. Informationsverarbeitungsverfahren, aufweisend:
Erlangen eines ersten Bildes und eines zweiten Bildes, das ein mit dem ersten Bild identisches Motiv enthält und von einer Bildaufnahmevorrichtung aufgenommen wird;
Erlangen von zwei Sätzen von Punktwolkendaten, die eine Abstandsverteilung darstellen, wobei die beiden Sätze von Punktwolkendaten aus ersten Punktwolkendaten, bei denen sich ein Aufnahmebereich des ersten Bildes und ein Messbereich der Abstandsverteilung zumindest teilweise überlappen, und aus zweiten Punktwolkendaten bestehen, bei denen sich ein Aufnahmebereich des zweiten Bildes und ein Messbereich der Abstandsverteilung zumindest teilweise überlappen, wobei eine optische Achse eines optischen Systems, das von der Bildaufnahmevorrichtung zum Aufnehmen des ersten und des zweiten Bildes verwendet wird, und eine optische Achse eines optischen Systems, das von einer Abstandsmessvorrichtung zum Messen der Abstandsverteilung verwendet wird, miteinander übereinstimmen;
Erlangen einer Transformationsmatrix einer homografischen Transformation, die eine Korrespondenzbeziehung zwischen Positionen im ersten Bild und im zweiten Bild darstellt, basierend auf dem ersten Bild und dem zweiten Bild, wobei die Transformationsmatrix der homografischen Transformation, die die Korrespondenzbeziehung darstellt, durch Durchführen eines Abgleichens von Merkmalspunkten berechnet wird, die im ersten Bild und im zweiten Bild enthalten sind; und
Erstellen von Assoziationen zwischen den ersten Punktwolkendaten und den zweiten Punktwolkendaten basierend auf der Transformationsmatrix der homografischen Transformation.

5. Programm zum Veranlassen, dass ein Computer eine Verarbeitung ausführt, aufweisend:
Erlangen eines ersten Bildes und eines zweiten Bildes, das ein mit dem ersten Bild identisches Motiv enthält und von einer Bildaufnahmevorrichtung aufgenommen wird;
Erlangen von zwei Sätzen von Punktwolkendaten, die eine Abstandsverteilung darstellen, wobei die beiden Sätze von Punktwolkendaten aus ersten Punktwolkendaten, bei denen sich ein Erlangungsbereich des ersten Bildes und ein Messbereich der Abstandsverteilung zumindest teilweise überlappen, und aus zweiten Punktwolkendaten bestehen, bei denen sich ein Erlangungsbereich des zweiten Bildes und ein Messbereich der Abstandsverteilung zumindest teilweise überlappen, wobei eine optische Achse eines optischen Systems, das von der Bildaufnahmevorrichtung verwendet wird, um das erste Bild und das zweite Bild aufzunehmen, und eine optische Achse eines optischen Systems, das von einer Abstandsmessvorrichtung verwendet wird, um die Abstandsverteilung zu messen, miteinander übereinstimmen;
Erlangen einer Transformationsmatrix einer homografischen Transformation, die eine Korrespondenzbeziehung zwischen Positionen im ersten Bild und im zweiten Bild darstellt, basierend auf dem ersten Bild und dem zweiten Bild, wobei die Transformationsmatrix der homografischen Transformation, die die Korrespondenzbeziehung darstellt, durch Durchführen eines Abgleichens von Merkmalspunkten berechnet wird, die im ersten Bild und im zweiten Bild enthalten sind; und
Erstellen von Assoziationen zwischen den ersten Punktwolkendaten und den zweiten Punktwolkendaten basierend auf der Transformationsmatrix der homografischen Transformation, die die Korrespondenzbeziehung darstellt.

## Revendications

1. Dispositif de traitement d'informations (13), comprenant :
une unité d'acquisition d'image (42) configurée pour acquérir une image à partir d'un dispositif de capture d'image (12) ;
une unité d'acquisition de données de nuage de points (41) configurée pour acquérir des données de nuage de points représentant une distribution de distances à partir d'un dispositif de mesure de distance (11), où un axe optique d'un système optique (14) utilisé par le dispositif de capture d'image (12) pour capturer une image et un axe optique d'un système optique (14) utilisé par le dispositif de mesure de distance (11) pour mesurer la distribution de distances coïncident l'un avec l'autre ; et
un contrôleur (43) configuré pour, sur la base d'une première image et d'une deuxième image acquises depuis l'unité d'acquisition d'image (42) et capturées par le dispositif de capture d'image, la deuxième image contenant un sujet identique à celui de la première image, acquérir une matrice de transformation d'une transformation homographique représentant une relation de correspondance entre des positions dans la première image et la deuxième image, dans lequel le contrôleur (43) est configuré pour calculer la matrice de transformation de la transformation homographique représentant la relation de correspondance en effectuant une mise en correspondance de points caractéristiques contenus dans la première image et la deuxième image et, sur la base de la matrice de transformation de la transformation homographique, créer des associations entre deux ensembles de données de nuage de points acquis à partir de l'unité d'acquisition de données de nuage de points (41), les deux ensembles de données de nuage de points étant constitués de premières données de nuage de points dans lesquelles une plage de capture de la première image et une plage de mesure de la distribution de distances se chevauchent au moins partiellement, et de deuxièmes données de nuage de points dans lesquelles une plage de capture de la deuxième image et une plage de mesure de la distribution de distances se chevauchent au moins partiellement.

2. Dispositif de traitement d'informations (13) selon la revendication 1,
dans lequel le contrôleur (43) estime un montant de rotation et un montant de déplacement du dispositif de capture d'image (12) ou du dispositif de mesure de distance (11) sur la base des associations entre les premières données de nuage de points et les deuxièmes données de nuage de points.

3. Dispositif de traitement d'informations (13) selon la revendication 1 ou 2,
dans lequel le dispositif de capture d'image (12) et le dispositif de mesure de distance (11) sont configurés pour capturer la première image et mesurer la distribution de distances afin d'acquérir les premières données de nuage de points simultanément, et pour capturer la deuxième image et mesurer la distribution de distances afin d'acquérir les deuxièmes données de nuage de points simultanément.

4. Procédé de traitement d'informations, comprenant :
l'acquisition d'une première image et d'une deuxième image, contenant un sujet identique à celui de la première image, capturées par un dispositif de capture d'image ;
l'acquisition de deux ensembles de données de nuage de points représentant une distribution de distances, les deux ensembles de données de nuage de points étant constitués de premières données de nuage de points dans lesquelles une plage de capture de la première image et une plage de mesure de la distribution de distances se chevauchent au moins partiellement, et de deuxièmes données de nuage de points dans lesquelles une plage de capture de la deuxième image et une plage de mesure de la distribution de distances se chevauchent au moins partiellement, dans lequel un axe optique d'un système optique utilisé par le dispositif de capture d'image pour capturer la première image et la deuxième image et un axe optique d'un système optique utilisé par un dispositif de mesure de distance pour mesurer la distribution de distances coïncident l'un avec l'autre ;
l'acquisition d'une matrice de transformation d'une transformation homographique représentant une relation de correspondance entre des positions dans la première image et la deuxième image sur la base de la première image et de la deuxième image, dans lequel la matrice de transformation de la transformation homographique représentant la relation de correspondance est calculée en effectuant une mise en correspondance de points caractéristiques contenus dans la première image et la deuxième image ; et
la création d'associations entre les premières données de nuage de points et les deuxièmes données de nuage de points sur la base de la matrice de transformation de la transformation homographique.

5. Programme destiné à amener un ordinateur à exécuter un traitement comprenant :
l'acquisition d'une première image et d'une deuxième image, contenant un sujet identique à celui de la première image, capturées par un dispositif de capture d'image ;
l'acquisition de deux ensembles de données de nuage de points représentant une distribution de distances, les deux ensembles de données de nuage de points étant constitués de premières données de nuage de points dans lesquelles une plage de capture de la première image et une plage de mesure de la distribution de distances se chevauchent au moins partiellement, et de deuxièmes données de nuage de points dans lesquelles une plage de capture de la deuxième image et une plage de mesure de la distribution de distances se chevauchent au moins partiellement, dans lequel un axe optique d'un système optique utilisé par le dispositif de capture d'image pour capturer la première image et la deuxième image, ainsi qu'un axe optique d'un système optique utilisé par un dispositif de mesure de distance pour mesurer la distribution de distances, coïncident l'un avec l'autre ;
l'acquisition d'une matrice de transformation d'une transformation homographique représentant une relation de correspondance entre des positions dans la première image et la deuxième image sur la base de la première image et de la deuxième image, dans lequel la matrice de transformation de la transformation homographique représentant la relation de correspondance est calculée en effectuant une mise en correspondance de points caractéristiques contenus dans la première image et la deuxième image ; et
la création d'associations entre les premières données de nuage de points et les deuxièmes données de nuage de points sur la base de la matrice de transformation de la transformation homographique représentant la relation de correspondance.
